# EUROPEAN PATENT APPLICATION

(11) **EP 0 771 993 A1**
(43) Date of publication of application: **07.05.1997**
(21) Application number: 96307702.9
(22) Date of filing: 24.10.1996
(51) Int. Cl.: F16L 55/162

(54) **Method of lining a length of pipe**

(30) Priority: 06.11.1995 GB 9522714
(71) Applicant: AMEC Utilities Limited, Northwich, Cheshire CW8 2YA (GB); Hunting Industrial Coatings Limited, Widnes, Cheshire WA8 9ND (GB)
(72) Inventor: Rose, Peter John, Bridgewater, Somerset TA5 2AR (GB); Whittle, Neil Thomas, Radcliffe, Manchester M26 3XB (GB)
(74) Representative: Skone James, Robert Edmund

(57) **Abstract**

The method of lining a pipe (1), the method comprising coating the interior of the pipe with a liquid curable coating, and allowing the coating to cure. Hot air (32) is passed along the bore of the length of the pipe whereby the coating is heated up to promote the cure process. A coating rig is passed along the length of the pipe to coat the interior of the pipe. Typically the pipe is a water pipe which is coated with a solvent and benzoyl alcohol free epoxy resin.

## Description

The present invention relates to a method of lining a length of pipe, typically as part of a process of pipeline rehabilitation.

Pipeline rehabilitation involves the repair of corroded pipes. A number of methods may be employed in the rehabilitation process. One method of rehabilitating a pipe involves coating the internal surface of the pipe with a suitable material. In the case of potable water pipes (typically cast iron or steel pipes suitable for carrying drinking water without toxic contamination of the water) it is necessary to provide a lining which complies with drinking water regulations. A common method for rehabilitating potable water pipes involves spray coating the interior of the pipe with a solvent free and benzoyl alcohol free epoxy resin. The resin comprises two components: a resin and a hardener, which are mixed immediately prior to spraying onto the pipe. Immediately after mixing, the epoxy resin begins to cure by an exothermic reaction. The heat generated by the exothermic reaction acts as a catalyst and decreases the cure time. However the layer of epoxy resin is typically fairly thin and this results in the heat being dissipated rapidly and results in a longer cure time for the resin. Clearly it is necessary for the resin to fully cure before the water pipe can be put back into service. A typical cure time of 16 hours is experienced in a conventional water pipe epoxy lining process.

The epoxy resin and hardener are stored in heated tanks and pumped along separate umbilical hoses which are connected to a mixer immediately prior to the spray head. In order to set up the system, it is necessary to pump the two materials from the heated containers along the length of the hoses. This may take up to 20 minutes and results in heat loss. It is known to provide heated umbilical hoses which prevent cooling of the materials, particularly when operating under cold weather conditions. The materials become more difficult to pump at lower temperatures and the umbilical heating reduces this problem.

In a method of sewer rehabilitation described in "Recent Field Trials and Quality Testing of Soft-Lining Cured-In-Place Techniques for the Renovation of the Renovation of the Wastewater Network", D.A. Shephard, papers presented at the 2nd International Conference on Water Pipeline Systems on 24-26 May 1994, page 267, a soft-lining cured-in-place technique is employed, involving the insertion of a resin impregnated lining tube or a glass fibre reinforced liner which is then cured to form a tight fit against the existing sewer using hot water or steam. This type of lining tube or heating technique is not suitable for potable water pipe rehabilitation, or any rehabilitation process involving the application of a liquid applied coating.

In accordance with the present invention, there is provided a method of lining a length of pipe, the method comprising coating the interior of the pipe with a liquid curable coating, and allowing the liquid coating to cure, characterised in that the method further comprises passing hot air along the bore of the length of the pipe whereby the liquid coating is heated up to promote the cure process.

The pipe may be an oil pipeline or sewer but preferably is a water pipe which carries potable water in use.

The coating material may be any suitable material for the particular type of pipe being lined. The liquid coating may comprise a single component coating, but typically comprises a two component coating which is mixed before coating the interior of the pipe. Preferably the liquid coating is an epoxy resin. In the case of a water pipe the epoxy resin is preferably solvent free and benzoyl alcohol free.

Typically the pipe is heated immediately prior to the cure to reach a suitable temperature, and during the length of the cure process.

An embodiment of the present invention will now be described with reference to the accompanying figure, in which:-

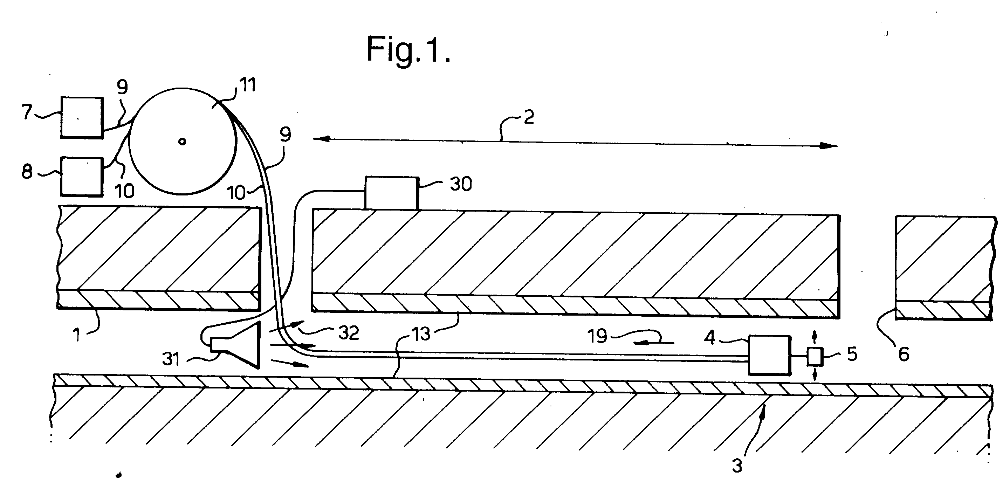

Figure 1 is a cross-section of a water main being lined and heated using hot air.

Figure 1 is a schematic cross-section (not to scale) of a pipe being lined according to the first aspect of the present invention. The pipe 1 may be any suitable pipe for carrying potable water. Typically the pipe 1 is iron, steel or asbestos cement with a diameter of 75mm or above. A length 2 of the pipe is lined in the illustrated process. Typically the length 2 will be in the range of 150 to 170 metres. Prior to lining, the pipe 1 is cleaned to remove all tuberculation, deposits, loose or deteriorated remains of any original coating and other foreign materials from inside the pipe. Any suitable cleaning method may be used, such as water jetting.

After cleaning and prior to lining, a suitable prover is passed through the pipe to ensure free passage of the lining equipment.

A lining rig 3 comprising a mixing unit 4 and spinning application head 5 is lowered into the pipe 1 through an access hole 6. At the other end of the length of pipe 2 is situated a reservoir 7 for storing solvent free, benzoyl alcohol free epoxy resin and a separate reservoir 8 for storing hardener. The reservoirs 7,8 are connected to hoses 9,10 which are wound around a reel 11. The epoxy resin and hardener in the reservoir 7 and 8 are heated to maintain their temperature in accordance with the manufacturers instructions. Facility (not shown) to recirculate the components in the reservoirs and through the lining hoses 9,10 prior to lining is also provided. The resin and hardener are pumped down their respective hoses 9,10 by suitable positive displacement pumps (not shown) capable of dispensing the two components separately at the correct mixed ratio within specified tolerances. The lining equipment is also fitted with flow and/or pressure monitoring systems (not shown) which display a continuous record of the resin and hardener delivered to the display head. Before inserting the delivery hoses 9,10 into the pipe, the resin and hardener are heated to their operating temperature and circulated through the hoses. Immediately prior to hose insertion, the resin/hardener output from the pumps and through the hoses is weight checked to ensure the mix ratio is correct. The hoses 9,10 are then inserted into the pipe via an access hole 12 and passed along to the opposite end of the length of pipe. The hoses 9,10 are then connected to the mixer 4. The apparatus is now ready for lining the pipe.

Prior to lining, the internal surface 13 of the length of pipe 2 may be heated using the hot air generating equipment shown in Figure 1. A power supply 30 is connected to a hot air generator 31 which generates hot air 32 which is passed along the length of the pipe 2. When the internal surface 13 of the pipe has reached a suitable temperature, lining is commenced by pumping resin and hardener along their respective hoses, mixing in mixing unit 4 and centrifugally spraying the mixed liquid (using spinning application head 5) onto the bore of the pipe. Typically the application head spins at 1700 revolutions per minute. The rig 3 travels down the length of the pipe in the direction indicated by arrow 19 and the hoses 9,10 are wound onto the reel 11. As a result, a thin film of resin is applied along the length of the pipe.

When the rig 3 reaches the access hole 12, the rig and hoses are removed and the lining is left to cure. During this time, hot air is continuously supplied to heat the pipe (and consequently the epoxy film) and reduce the cure time. Typical cure times of approximately 4 to 6 hours are obtainable using this method.

## Claims

1. A method of lining a length of pipe (1), the method comprising coating the interior of the pipe with a liquid curable coating, and allowing the liquid coating to cure, the method further comprising passing hot air (32) along the bore of the length of the pipe whereby the coating is heated up to promote the cure process.

2. A method according to claim 1, comprising passing a coating rig (3) along the length of the pipe, wherein the rig coats the interior of the pipe with the liquid coating.

3. A method according to claim 1 or claim 2, wherein the liquid coating comprises a two component coating, the method further comprising mixing the two components before coating the interior of the pipe.

4. A method according to any of the preceding claims, wherein the coating comprises epoxy resin.

5. A method according to claim 4, wherein the epoxy resin is solvent and benzoyl alcohol free.

6. A method according to any of the preceding claims, wherein the pipe is a potable water pipe.

7. A method according to any of the preceding claims, further comprising preheating the length of pipe (1) by passing hot air (32) along the bore of the length of the pipe before coating the interior of the pipe.
